# EUROPEAN PATENT SPECIFICATION

(11) **EP 4 069 502 B1**
(45) Date of publication and mention of the grant of the patent: **10.01.2024**
(21) Application number: 20808271.9
(22) Date of filing: 27.11.2020
(51) Int. Cl.: B29D 30/26

(54) **HANDLING APPARATUS AND METHOD FOR HANDLING AN ANNULAR TYRE STRUCTURE**
HANDHABUNGSVORRICHTUNG UND VERFAHREN ZUR HANDHABUNG EINER RINGFÖRMIGEN REIFENSTRUKTUR
APPAREIL DE MANIPULATION ET PROCÉDÉ DE MANIPULATION D'UNE STRUCTURE DE PNEU ANNULAIRE

(30) Priority: 03.12.2019 IT 201900022830
(43) Date of publication of application: 12.10.2022
(73) Proprietor: Pirelli Tyre S.p.A., 20126 Milano (IT)
(72) Inventor: DE COL, Christian, 20126 Milano (IT); PORTINARI, Gianni Enrico, 20126 Milano (IT)
(74) Representative: Vittorangeli, Lucia
(86) International application number: PCT/IB2020/061224
(87) International publication number: WO 2021/111265

(56) References cited:
- DE-A1-102010 037 267
- JP-A- S61 127 337
- US-A- 3 865 669

## Description

The present invention relates to a handling apparatus for handling an annular tyre structure and a method for handling an annular tyre structure.

The present invention also relates to a shaping machine and a process for building green tyres.

A tyre for vehicle wheels generally comprises a carcass structure comprising at least one carcass ply having respectively opposite ends engaged with respective anchoring annular structures, integrated in the zones normally identified with the name "beads", having an internal diameter substantially corresponding to a so-called "fitting diameter" of the tyre on a respective mounting rim.

An air-impermeable coating layer, normally termed "liner", can cover the inner surfaces of the carcass structure and hence of the tyre.

The carcass structure is associated with a belt structure which can comprise one or more belt layers, situated in radial superimposition with respect to each other and with respect to the carcass ply, having textile or metallic reinforcement cords with cross orientation and/or orientation substantially parallel to the circumferential extension direction of the tyre (at 0 degrees) with respect to the circumferential extension direction of the tyre.

In radially outer position with respect to the belt structure, a tread band is applied, also made of elastomeric material like other constituent components of the tyre.

Respective sidewalls made of elastomeric material are also applied in axially outer position on the lateral surfaces of the carcass structure, each extended from one of the lateral edges of the tread band up to the respective anchoring annular structure at the beads.

In a process for building the green tyre, provision can be made for separately making a so-called "carcass sleeve" and a so-called "outer sleeve".

In order to make the carcass sleeve, one or more carcass plies are applied on a building drum. The anchoring annular structures are fit or formed on the opposite end flaps of the carcass ply or plies, which are subsequently turned up around the annular structures themselves so as to enclose them in a kind of noose. Before terminating the building of the carcass sleeve, at least one portion of the sidewalls can be applied on the carcass ply/plies.

In order to make the outer sleeve, one or more belt layers are applied on a second drum or auxiliary drum in mutual radial superimposition. The tread band and possibly at least one portion of the sidewalls is applied in radially outer position to the belt layer/layers.

The outer sleeve is then picked up from the auxiliary drum in order to be coupled to the carcass sleeve.

The outer sleeve is for such purpose arranged coaxially around the carcass sleeve. Subsequently, the carcass ply or plies are shaped according to a toroidal configuration by means of mutual axial approaching of the beads and simultaneous introduction of pressurised fluid within the carcass sleeve, so as to cause a radial dilation of the carcass plies until they are made to adhere against the inner surface of the outer sleeve.

The assembly of the carcass sleeve with the outer sleeve can be actuated on the same drum used for making the carcass sleeve, such case being termed a "single-stage building process" or "unistage process".

Building process are also known of so-called "two-stages" type, in which a so-called "first-stage drum" is employed in order to make the carcass sleeve, while the assembly between carcass sleeve and outer sleeve is actuated on a so-called "second-stage drum" or "shaping drum", on which the following are transferred: the carcass sleeve picked up from the first-stage drum and, subsequently, the outer sleeve picked up from the auxiliary drum.

Following the building of the green tyre, a moulding and vulcanisation treatment is executed, aimed to determine the structural stabilisation of the tyre by cross-linking the elastomeric compositions as well as to imprint thereon, if requested, a desired tread design and possible distinctive graphic marks at the sidewalls of the tyre.

With "annular tyre structure" it is intended an annular structure attained during the process for building a green tyre and comprising one or more components of the tyre itself.

In accordance with a first example, the annular tyre structure is an outer sleeve.

In accordance with a second example, the annular tyre structure is the assembly consisting of the carcass sleeve and of the outer sleeve, e.g. in coupling step or in an immediately subsequent step.

In accordance with a third example, the annular tyre structure is the green tyre itself.

In accordance with a fourth example, the annular tyre structure is the carcass sleeve.

With "shoe" it is intended a movable element adapted to abut against the radially outer surface of the annular tyre structure in order to grip it.

With "operating motion" it is intended a motion for opening and/or closing the shoes, preferably radial, for handling an annular tyre structure, in particular for gripping or releasing an annular tyre structure.

With "independent operating motion" it is intended a motion in which the strokes carried out by different shoes can be controlled in an independent manner and hence be actively different from each other, also regardless of the presence of an annular tyre structure.

With "monitoring system" it is intended an assembly of mechanical and electric/electronic components suitably configured for performing the described functions.

With "force exchanged between shoe and annular tyre structure" it is intended the mainly radial load that the annular tyre structure exerts on the shoes following its reaction to abutment and griping by the shoes themselves.

With "drive signal generated as a function of a position monitoring" or "drive signal generated as a function of a position and force monitoring" it is intended a signal generated if the monitoring detects deviations with respect to specific reference values and/or a signal with which suitable instructions are associated if the monitoring detects deviations with respect to specific reference values.

With "control action" it is intended an action aimed to correct and/or to signal possible irregularities.

With "electric axle" it is intended an electric/mechanical component for the linear movement of mechanical systems.

The term "radial" and the expression "radially inner/outer" are used with reference to the radial direction of the devices used (e.g. drums, gripping ring) and/or of the tyre, i.e. to a direction perpendicular to the rotation or central axis of the device/devices used/tyre.

The term "axial" and the expression "axially inner/outer" are used with reference to the axial direction of the devices used (e.g. drums, gripping ring) and/or of the tyre, i.e. to a direction parallel to the rotation or central axis of the device/devices used/tyre.

The terms "circumferential" and "circumferentially" are used with reference to the annular extension of the devices used or of the tyre.

With the term "elastomeric material" it is intended to indicate a composition comprising at least one elastomeric polymer and at least one reinforcement filler. Preferably, such composition also comprises additives such as, for example, a cross-linking agent and/or a plasticising agent. Due to the presence of the cross-linking agent, by means of heating such material can be crosslinked, so as to form the final manufactured item.

WO2012/021160 describes a transfer ring comprising a plurality of movable shoes with respect to a first and second housing ring.

The collective radial movement of the shoes is driven by an actuator ring rotatably mounted between the housing rings. US5861079 describes a transfer ring for a tyre assembly machine. According to such document, it is current practice in the field of tyres to separately build a carcass and a tread band. The tread band forms a belt which must then be positioned precisely on the carcass by means of a transfer ring which can also be used for moving the green tyre. In particular, a tyre assembly machine is described, comprising an annular shape on which the belt structure is packaged. The annular shape is arranged coaxial with a drum on which the carcass structure is positioned. The transfer ring is slidably mounted between the annular shape and the drum. The transfer ring comprises a plurality of grippers pneumatically supplied by means of a single supply source. Different supply sources can be provided, arranged along the circumference of the ring in order to obtain a uniform closure of the grippers. Each gripper is moved independently from the others up to its contact with the belt, in fact the advancement of each gripper is stopped once there is contact with the belt. The activation and the independent movement of each gripper confers, to the grippers themselves, the possibility to take on a radial position slightly different from each other, when they grip the belt and hold it. Hence, when all the grippers are in contact with the belt, they will not have necessarily followed the same stroke. The actual stroke of a gripper depends on the centring precision of the transfer ring with respect to the annular shape or on possible defects in the belt itself. In particular, a pneumatic actuation is provided which allows independent radial strokes for each gripper, in order to obtain a certain level of flexibility in the adjustment of positioning of the transfer ring within the assembly machine and to limit the risks of deformation of the belt or of the tyre to be gripped.

In the tyre production sector, the Applicant has observed an increasing request to balance, on one hand, the need to be able to vary the production between different medium/small batches of tyres and, on the other hand, the need to maintain constant and high quality levels without negatively affecting the cycle time.

The Applicant has perceived the possibility to balance such opposite aspects by inserting an accurate control of the steps of the building process, so as to avoid introducing additional stations or components.

In particular, the Applicant has perceived the ability to exploit the steps of gripping and/or transferring of components of the tyre, in particular of annular tyre structures, to obtain an accurate control of the steps of the building process.

The Applicant has observed that the precision of the mechanical actuation described in WO2012/021160 decreases in the course of use due to the occurrence of wear phenomena and of loss of adjustment, which induce increasing clearances between the used mechanical components.

The Applicant has observed that the pneumatic actuation described in US5861079 is described as independent for each gripper, since it does not mechanically obligate the grippers to perform the same stroke but rather is configured, since it is pneumatic, so as to allow one or more grippers to be able to stop following the contact with the belt while the others can continue in the advancement stroke thereof. This characteristic makes it possible to accept a lack of coaxiality between the transfer ring and the assembly consisting of the annular shape and the drum. It follows that the precision of adjustment of the coaxiality between the transfer ring and the assembly consisting of the annular shape and of the drum can be less than the precision necessary for adjusting the coaxiality between the annular shape and the drum. The Applicant has therefore observed that the document US5861079 teaches tolerating errors of precision in the coaxiality between the transfer ring and the assembly consisting of the annular shape and of the drum in order to limit the number of adjustments to carry out.

In light of that stated above, the Applicant has observed that US5861079 entrusts the precision of the mutual positioning between carcass and belt to the use of a specific assembly machine comprising an annular shape on which the belt structure is built and at the exact axial positioning between such annular shape and the drum.

By pursuing an opposite goal with respect to that of US5861079, i.e. obtaining an accurate control of the steps of the building process by limiting possible inaccuracies as much as possible, the Applicant has in the end found that the union between an actively independent movement of the gripping shoes and a position monitoring allows preventing the onset of clearances and provides for further information relative to the quality of the tyre usable in various modes in the scope of the building process/plant.

Patent document US 3,865,669 A discloses an apparatus having similar features to those of the preamble of independent claim 1.

In accordance with a first aspect, the present invention relates to a handling apparatus according to claim 1.

In accordance with a second aspect the present invention relates to a method according to claim 7.

Thus, the Applicant deems that it is possible to arrange a high-precision handling system without clearances, which also allows exploiting the steps of gripping and/or transferring of components of the tyre, in particular of annular tyre structures, in order to have further information available relative to the quality of the tyre so as to increase the level of control of the steps of the building process.

In accordance with a third aspect the present invention relates to a shaping machine comprising a handling apparatus according to the first aspect adapted to receive at least one outer sleeve, and a mandrel adapted to receive a carcass sleeve.

In accordance with a fourth aspect the present invention relates to a process for building green tyres.

Preferably provision is made for building a carcass sleeve on a building drum.

Preferably provision is made for building an outer sleeve on an auxiliary drum.

Preferably provision is made for gripping said outer sleeve by means of a plurality of shoes of a gripping ring of a shaping machine, by applying the method for handling an annular tyre structure according to the second aspect, in which said outer sleeve defines a first annular tyre structure.

Preferably, provision is made for shaping the carcass sleeve within the outer sleeve by coupling them mutually.

The Applicant deems that, by applying to the shaping step the handling system in accordance with the first and the second aspect, the level of control of the steps of the building process is further increased, improving the coupling between the outer sleeve and the carcass sleeve both in terms of mutual coaxiality and in terms of absence of defects deriving from the preceding building steps.

In one or more of the above-indicated aspects, the present invention can comprise one or more of the following characteristics.

Preferably provision is made for carrying out a force monitoring, through which the force exchanged between each shoe and the annular tyre structure is monitored at least during the operating closing motion of each shoe.

Preferably, said monitoring system is configured to perform a force monitoring, through which the force exchanged between each shoe and the annular tyre structure is monitored, at least during the operating closing motion of each shoe.

Preferably, provision is made for performing a control action as a function of said position monitoring.

Preferably, provision is made for performing a control action as a function of said position monitoring and as a function of said force monitoring.

Preferably, said control action comprises one or more from among:
- controlling at least said operating closing motion as a function of said position monitoring,
- controlling at least said operating closing motion as a function of said position monitoring and of said force monitoring,
- signalling or activating a maintenance intervention or an adjustment intervention of a station or of a device for building the annular tyre structure,
- signalling or activating an adjustment intervention of a step for building the annular tyre structure.

Preferably, said monitoring system is configured to generate a drive signal for performing said control action.

Preferably, said drive signal is generated as a function of said position monitoring.

Preferably, said drive signal is generated as a function of said position monitoring and as a function of said force monitoring.

The Applicant deems that the monitoring of the radial position of the shoes or of the radial position of the shoes and of the force contributes to improving the quality of the tyre, allowing not only controlling the actual gripping step, which affects the arrangement of the annular tyre structure in the subsequent processes, but also intervening on the preceding processes. For example, it is possible:
- to make independent adjustments of each shoe for the achievement of a defined position or of a defined position and of a specific radial load;
- to make independent adjustments of each shoe in order to maintain the synchronism between the shoes, above all in the step of abutment against the annular tyre structure;
- to make adjustments of the coaxiality between the annular tyre structure and the shoes;
- to intervene in order to eliminate defects deriving from the building and/or manage possible maintenance or adjustment interventions.

Preferably, carrying out said position monitoring comprises detecting the radial position of each shoe at least during said operating closing motion and comparing the detected radial position with at least one reference value.

Preferably, said monitoring system is configured for detecting the radial position of each shoe at least during said operating motion and for comparing the detected radial position with at least one reference value.

Preferably, the radial position of each shoe is detected by means of a position transducer.

Preferably, carrying out said force monitoring comprises detecting the force exchanged between each shoe and the annular tyre structure and comparing the detected exchanged force with at least one reference value.

Preferably, said monitoring system is configured for detecting the force exchanged between shoe and annular tyre structure and comparing the detected exchanged force with at least one reference value.

Preferably the force exchanged between each shoe and the annular tyre structure is detected by means of a force transducer. Alternatively, if each shoe is actuated by an actuator thereof comprising an electric motor, detecting the force exchanged between each shoe and the annular tyre structure preferably comprises performing a torque control of the electric motor.

Knowing the radial position or the radial position and of the exchanged force and its comparison with a reference value, for example an absolute reference value, allows arranging additional objective information with respect to the known gripping systems and increasing the controls without introducing further steps and/or devices and without affecting the cycle time.

Preferably, carrying out said position monitoring comprises comparing the detected radial positions of said shoes with each other, each detected radial position defining said reference value for the detected radial positions of the other shoes.

Preferably, said monitoring system is configured for comparing the detected radial positions of said shoes with each other, each detected radial position defining said reference value for the detected radial positions of the other shoes.

Preferably, carrying out said force monitoring comprises comparing the exchanged forces detected for each shoe with each other, each exchanged force detected at a shoe defining said reference value for the exchanged forces detected at the other shoes.

Preferably, said monitoring system is configured for comparing the exchanged forces detected for each shoe with each other, each exchanged force detected at a shoe defining said reference value for the exchanged forces detected at the other shoes.

Knowing the radial position of a shoe with respect to the others or of the radial position of a shoe with respect to the others and of the exchanged force from a shoe with respect to the others allows having information on the synchronism of the motion of each shoe which, in the presence of independent actuators, is structurally disconnected from that of the other shoes. In addition, also such comparison allows arranging additional objective information with respect to the known gripping systems and increasing the controls without introducing further steps and/or devices and without affecting the cycle time.

Preferably, controlling at least said operating closing motion comprises driving actuators associated with said shoes to restore said reference value of the radial position, when the detected radial position deviates from the reference value.

Preferably, said control action comprises driving said actuators to restore said reference value of the radial position, when the detected radial position deviates from the reference value.

Preferably, said monitoring system is configured to generate said drive signal directed to one or more of the actuators in order to restore said reference value of the radial position, when the detected radial position deviates from the reference value.

Preferably, controlling at least said operating closing motion comprises driving actuators associated with said shoes in order to restore said reference value of the exchanged force, when the detected exchanged force deviates from the reference value.

Preferably, said control action comprises driving said actuators to restore said reference value of the exchanged force, when the detected exchanged force deviates from the reference value.

Preferably, said monitoring system is configured to generate said drive signal directed to one or more of the actuators to restore said reference value of the exchanged force, when the detected exchanged force deviates from the reference value.

The management and the control of the shoes is obtained by means of independent checks and/or adjustments of each shoe on the basis of a reference position or of a reference position and of a reference value of the exchanged force, linked for example to the type and to the size of the annular tyre structure, or on the basis of a reference position linked for example to the position taken by the other shoes so as to maintain them synchronised.

Due to the management and to the control of the radial position of the shoes, it is possible to improve the precision in the gripping of the annular tyre structure, positively affecting its positioning in the subsequent steps. For example, in the case of handling the outer sleeve in a step preceding the coupling with the carcass sleeve, the management and the control of the radial position of the shoes affects the precision of the mutual coaxial positioning.

Preferably provision is made for controlling a relative axial positioning motion of said annular structure of a transport handler of a drum bearing the annular tyre structure.

Preferably, said control action comprises signalling or activating an adjustment intervention of a step for building the annular tyre structure, when the detected radial position deviates from the reference value.

Preferably, said monitoring system is configured to generate said drive signal directed to a control unit of the plant for signalling or activating an adjustment intervention of a step for building the annular tyre structure, when the detected radial position deviates from the reference value.

Preferably, said control action comprises signalling or activating an adjustment intervention of a step for building the annular tyre structure, when the detected exchanged force deviates from the reference value.

Preferably, said monitoring system is configured to generate said drive signal directed to a control unit of the plant for signalling or activating an adjustment intervention of a step for building the annular tyre structure, when the detected exchanged force deviates from the reference value.

Preferably, said control action comprises signalling or activating a maintenance intervention or an adjustment intervention of a station or of a device for building the annular tyre structure, when the detected radial position deviates from the reference value.

Preferably, said monitoring system is configured to generate said drive signal directed to a control unit of the plant for signalling or activating a maintenance intervention or an adjustment intervention of a station or of a building device, when the detected radial position deviates from the reference value.

Preferably, said control action comprises signalling or activating a maintenance intervention or an adjustment intervention of a station or of a device for building the annular tyre structure, when the detected exchanged force deviates from the reference value.

Preferably, said monitoring system is configured to generate said drive signal directed to a control unit of the plant for signalling or activating a maintenance intervention or an adjustment intervention of a station or of a building device, when the detected exchanged force deviates from the reference value.

The incorrect positioning of one or more shoes, the detection of a radial load not in accordance with the expectations or both situations allow making possible defects of the annular tyre structure, deriving from the building, emerge.

Preferably, said control action comprises signalling or activating a maintenance intervention or an adjustment intervention of a gripping ring comprising said plurality of shoes.

Preferably, said adjustment intervention of the gripping ring comprises releasing the annular tyre structure and performing an adjustment motion opposite said operating closing motion until the shoes abut against a radially outer end stop.

Preferably, said adjustment intervention of the gripping ring comprises releasing the annular tyre structure and performing an adjustment motion in accordance with said operating closing motion until the shoes abut against a flange of an adjustment member having transverse dimension corresponding to a radial adjustment position of the shoes.

It is therefore possible to use the monitoring data to correct and/or anticipate possible errors in the movement of the shoes, underlying the need to have a maintenance of the gripping ring or allowing an efficient maintenance. It is also possible to verify and automatically calibrate the concentricity of the shoes.

Preferably, said actuator is an electric actuator. Still more preferably said actuator comprises an electric motor.

Preferably, said actuator comprises an electric axle and a rotary electric motor associated with the respective position transducer.

Preferably, said actuator comprises an electric axle and a rotary electric motor, said electric axle being interposed between the rotary electric motor and the shoe.

More preferably said rotary electric motor, is brushless. Preferably, said electric actuator comprises a linear electric motor.

Preferably said linear electric motor is interposed between the annular frame and the shoe.

Still more preferably said linear electric motor is directly connected to the shoe.

Preferably, the shoes are movable along a radial trajectory with respect to the annular frame.

Preferably, said monitoring system comprises, for each gripping member, a position transducer configured to generate a position signal indicative of the radial position of the respective shoe.

Preferably, said monitoring system comprises at least one electronic monitoring module configured to receive said position signal.

Preferably each position transducer is associated with a shoe. Still more preferably each position transducer is associated with an actuator. If said actuator comprises an electric motor, the position transducer is preferably an encoder associated with the electric motor.

Preferably, said monitoring system comprises for each gripping member a force transducer configured to generate a force signal indicative of the force exchanged between each shoe and the annular tyre structure during said operating motion.

Preferably, said monitoring system comprises at least one electronic monitoring module configured to receive said force signal.

Preferably, said force transducer is a load cell operating under traction or compression.

Preferably, said force transducer is attained by means of a strain gauge directly applied on each shoe.

Preferably, said force transducer is interposed between the shoe and the actuator.

If said actuator comprises a rotary electric motor and an electric axle interposed between the rotary electric motor and the shoe, said force transducer is preferably interposed between said electric axle and the shoe.

If said actuator comprises an electric motor, preferably said monitoring system is configured for performing a torque control of the electric motor in order to carry out said force monitoring.

Preferably, the gripping ring comprises a radially outer end stop corresponding to a radial adjustment position of the shoes.

Preferably, the end stop is made from a fixed portion of the gripping member or from a circumferential surface of the annular frame.

Preferably, the end stop is made from a head surface of an electric axle of the actuator.

The presence of an end stop allows uniquely defining the zero or reference position of the shoes by using the shoes themselves and the fixed portions to which they are connected.

Preferably, the gripping ring comprises a number of shoes different from a number of vulcanisation sectors of a vulcanisation mould arranged downstream of the handling apparatus.

Still more preferably, the gripping ring comprises a number of shoes different from a multiple or a submultiple of a number of vulcanisation sectors of a vulcanisation mould arranged downstream of the handling apparatus.

Preferably, the gripping ring comprises a number of shoes different from a number of drum building sectors used for building.

Still more preferably, the gripping ring comprises a number of shoes different from a multiple or a submultiple of a number of drum building sectors used for building.

Preferably, the gripping ring comprises an odd number of shoes, still more preferably equal to nine shoes.

In this manner, it is possible to limit the presence of defects distributed circumferentially, always with the same frequency, and thus the onset of a further harmonic in the annular tyre structure which could induce vibrations in the finished tyre.

Preferably, said handling apparatus is arranged in fixed position on the shaping machine and said mandrel is axially movable approaching and away from the gripping ring.

Preferably, the mandrel is stably associated with a shaping drum.

Alternatively, the mandrel is preferably configured to receive a building drum, on which the carcass sleeve is arranged, and adapted to operate as shaping drum in the shaping machine.

Preferably, said gripping ring performs the function of radially outer opposition during the shaping of the carcass sleeve. Preferably, an adjustment member is provided, comprising at least one flange and preferably a central shaft on which the flange is mounted.

Preferably, the central shaft is adapted to be mounted on the mandrel of the shaping machine.

Preferably, the flange has transverse dimension corresponding to a radial adjustment position of the shoes.

Still more preferably, the flange has a polygonal shape with number of sides equal to the number of shoes of the gripping ring, e.g. equal to nine.

In this manner it is possible to adjust the radial position of the shoes with respect to the theoretic axis that represents an objective reference point, by checking and automatically calibrating the concentricity of the shoes.

Preferably provision is made for performing an approach stroke of said operating closing motion which brings the shoes from the first radial position to a radial contact position in which the gripping surfaces come into contact with the annular tyre structure.

Preferably provision is made for detecting the achievement of said radial contact position of the shoes by means of said position monitoring and said force monitoring.

Preferably provision is made for simultaneously performing an initial step of the radial contraction of the drum and a tracking stroke of said operating closing motion which brings the shoes from the radial contact position to the second radial position.

Preferably provision is made for stopping said operating closing motion when said shoes are found in the second radial position and continuing the radial contraction of the drum until reaching a radial dimension suitable for the axial extraction of the drum from the annular tyre structure.

Preferably, the gripping surfaces remain in contact with the annular tyre structure during the tracking stroke.

In this manner, a dynamic, synchronised and simultaneous tracking is obtained between the shoes and the drum which allows recovering a possible elastic contraction, for example of the outer sleeve.

Preferably provision is made for locking said shoes in the second radial position.

If said outer sleeve defines a first annular tyre structure, preferably provision is made for performing a control action as a function of said position monitoring, said control action being related to gripping conditions of the outer sleeve and/or to building conditions of the outer sleeve.

If said outer sleeve defines a first annular tyre structure, preferably provision is made for performing a control action as a function of said position monitoring and of said force monitoring, said control action being related to gripping conditions of the outer sleeve and/or to building conditions of the outer sleeve. Preferably provision is made for arranging said carcass sleeve on a mandrel of the shaping machine, coaxial and in radially inner position with respect to the outer sleeve.

Preferably an assembly consisting of the carcass sleeve arranged within the outer sleeve defines a second annular tyre structure.

Preferably provision is made for shaping said carcass sleeve within the outer sleeve while the shoes of the gripping ring are locked in the second radial position and act as an abutment to the shaping.

Preferably, the carcass sleeve is picked up from the building drum and positioned on a shaping drum of the shaping machine. Alternatively, the carcass sleeve is arranged on the mandrel, remaining associated with the building drum which performs a shaping drum function.

Preferably, provision is made for axially translating said mandrel carrying said carcass sleeve up to arranging the carcass sleeve in the radially inner position with respect to the outer sleeve, while the axial position of said gripping ring remains unchanged.

Preferably, provision is made for monitoring the force exchanged between each shoe and the second annular tyre structure during the shaping of the carcass sleeve.

Preferably, provision is made for performing a control action as a function of said position monitoring and of said force monitoring, said control action being related to shaping conditions of the carcass sleeve and/or to building conditions of the outer sleeve or of the carcass sleeve.

Preferably, provision is made for rolling said second annular tyre structure outside the gripping ring in order to obtain a green tyre.

Still more preferably provision is made for generating an operating opening motion of the shoes opposite said operating closing motion and axially translating said mandrel carrying said second annular structure up to arranging it in a rolling station, while the axial position of said gripping ring remains unchanged.

Preferably, provision is made for gripping said green tyre by means of said plurality of shoes in which said green tyre defines a third annular tyre structure.

Preferably, provision is made for performing a control action as a function of said position monitoring, said control action being related to gripping conditions of the green tyre and/or to building conditions of the green tyre.

Preferably, provision is made for performing a control action as a function of said position monitoring and of said force monitoring, said control action being related to gripping conditions of the green tyre and/or to building conditions of the green tyre.

Further characteristics and advantages will be clearer from the following detailed description of a preferred embodiment.

Such description will be set forth hereinbelow with reference to the enclosed drawings, provided as a non-limiting example, in which:
- figure 1 schematically shows a gripping ring for handling an annular tyre structure;
- figure 2 shows the gripping ring of figure 1 in a different configuration;
- figures 3A-3C schematically illustrate a section of a portion of the gripping ring of figure 1 in different configurations corresponding to several actions of a method for handling an annular tyre structure;
- figure 4 schematically illustrates a member for adjusting the gripping ring of figure 1;
- figure 5 schematically illustrates a top view of a plant for producing tyres;

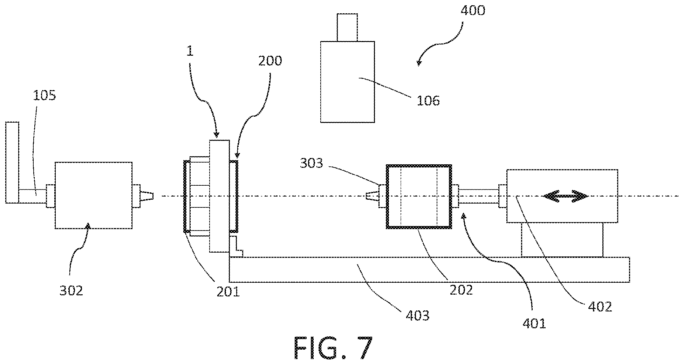

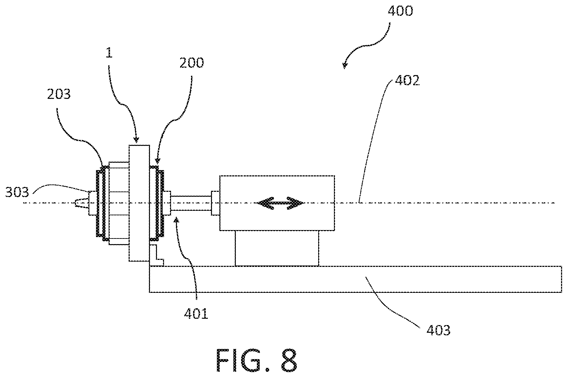

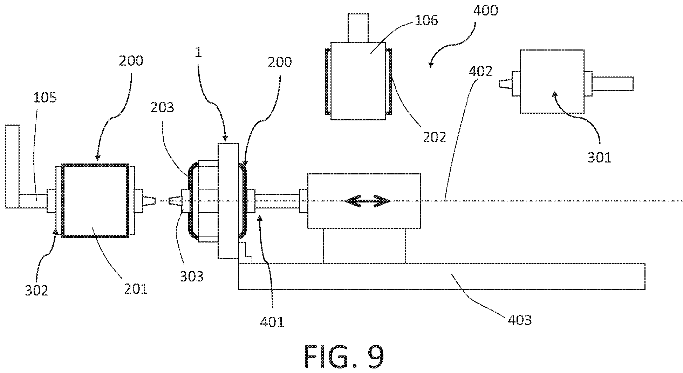

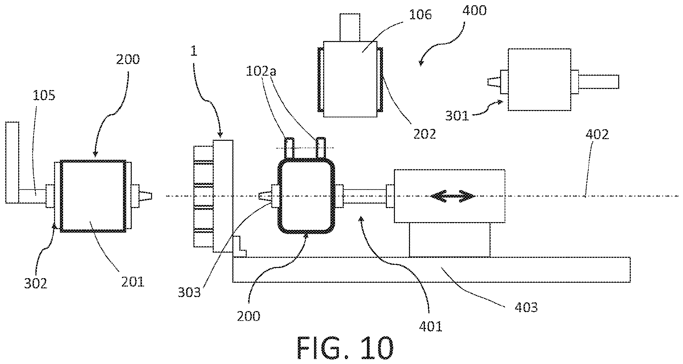

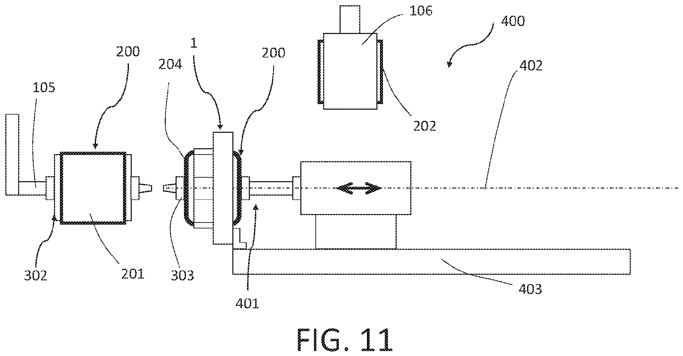

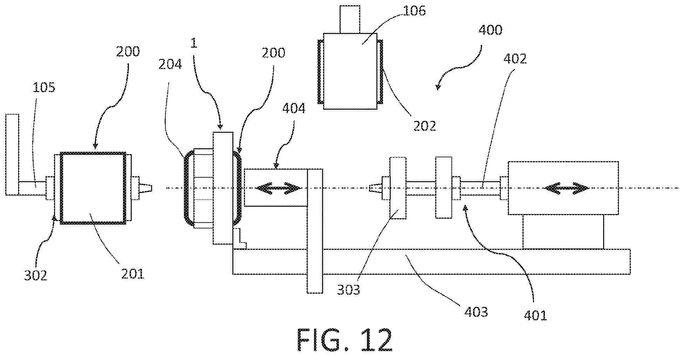

- figures 6-12 illustrate a side view of a portion of the plant of figure 5 in different configurations corresponding to several actions of a process for building green tyres.

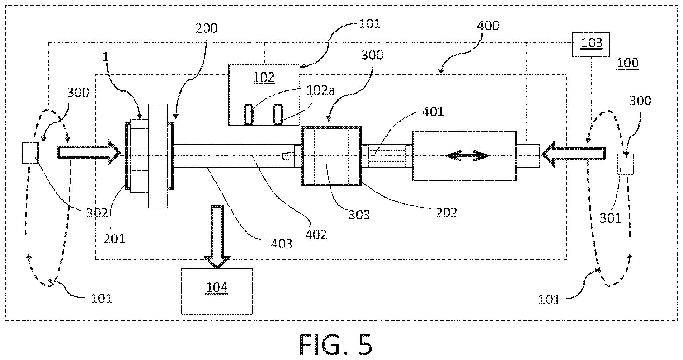

With reference to the enclosed figures, reference number 1 indicates a gripping ring belonging to a handling apparatus for handling an annular tyre structure 200. Such gripping ring 1 is adapted to be used in a plant 100 for producing tyres (figure 5). The plant 100 comprises building stations and/or devices 101 configured for actuating at least one step for building said annular tyre structure 200. Between such building stations and/or devices, a rolling station is more specifically indicated with 102, for example comprising one or more rolling rollers 102a.

With 103, a control unit of the plant 100 is indicated and with 104 a vulcanisation mould of the green tyre is indicated.

In the plant 100, drums 300 are used that are adapted to perform specific functions including, for example, at least one building drum 301 (used for building carcass sleeves), at least one auxiliary drum 302 (used for building outer sleeves), a shaping drum 303 (used for shaping the carcass sleeve and its assembly with the outer sleeve).

The gripping ring 1 allows handling an annular tyre structure 200 made in the course of building the green tyre. The annular tyre structure 200 can for example be an outer sleeve 201, a carcass sleeve 202, an assembly 203 consisting of the carcass sleeve and the outer sleeve, or a green tyre 204.

The gripping ring 1 comprises an annular frame 2 which is extended around a central axis 3. Preferably, the annular frame 2 has circular shape around the central axis 3, in particular it has ring shape. Still more preferably, the annular frame 2 consists of a closed structure that completely surrounds an inner space 4. The handling apparatus can be used as a moving component of the production plant, for gripping and translating annular tyre structures 200 or it can be used as a fixed component of the production plant, as will be subsequent described, for gripping and providing annular tyre structures 200.

With 5, a gripping member mounted on the annular frame 2 is indicated. The gripping member 5 comprises a shoe 6 which has a gripping surface 7 facing the central axis 3. The gripping surface 7 is intended to come into contact with a radially outer surface 205 of the annular tyre structure 200.

The shoe 6 is movable in a plurality of radial positions with respect to the annular frame 2 and with respect to the central axis 3. Preferably, the shoe 6 is movable along a radial trajectory with respect to the annular frame 2. With respect to an operating motion, the shoe 6 is movable between a first radial position or radially outer position and a second radial position or radially inner position.

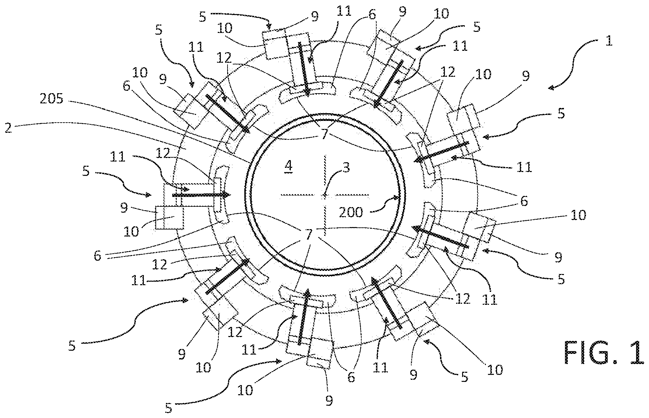

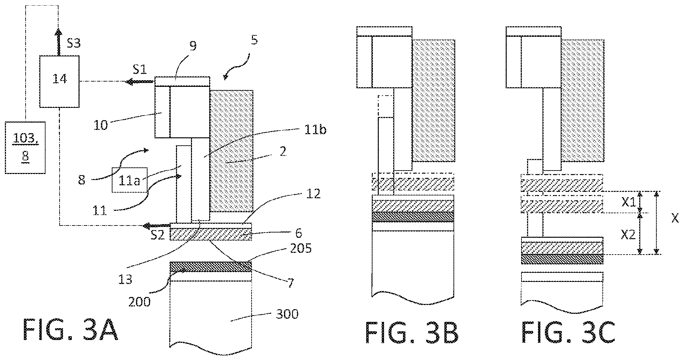

The gripping ring 1 comprises a plurality of gripping members 5 distributed on the annular frame 2 according to a circumferential direction of the annular frame itself. Also the shoes 6 and the respective gripping surfaces 7 are arranged according to a circumferential direction with respect to the central axis 3. Illustrated in figure 1 and in figure 3A is the first radial position of the shoes 6 and of the respective gripping surfaces 7 in which the gripping ring 1 can receive an annular tyre structure 200 to be handled.

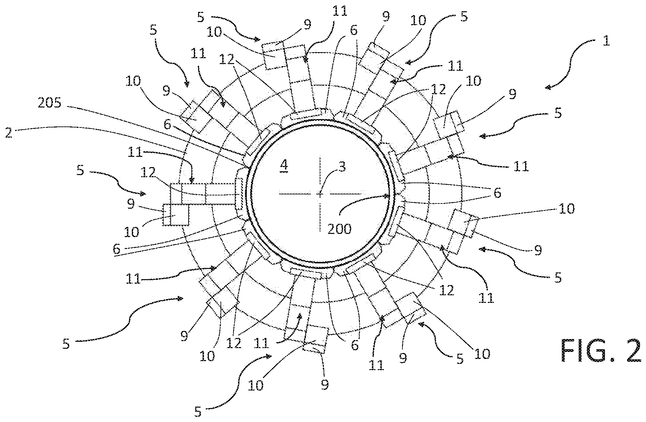

Illustrated in figure 2 and in figure 3C is the second radial position of the shoes 6 and of the respective gripping surfaces 7 in which each gripping surface 7 is in contact with the annular tyre structure 200 and holds it.

Preferably, the number of gripping members 5 or the number of shoes 6 is different from the number of vulcanisation sectors of a vulcanisation mould 104 arranged downstream of the handling apparatus. Still more preferably the number of gripping members 5 or the number of shoes 6 is different from a multiple or from a submultiple of the number of vulcanisation sectors of a vulcanisation mould 104.

Preferably, the number of gripping members 5 or the number of shoes 6 is different from the number of building sectors of one or more drums 300 used for building. Still more preferably the number of gripping members 5 or the number of shoes 6 is different from a multiple or a submultiple of the number of building sectors of one or more drums 300 used for building.

In accordance with the illustrated example, the number of gripping members 5 or the number of shoes 6 is odd and preferably equal to nine.

Each gripping member 5 comprises an actuator 8, preferably an electric actuator 8, interposed between the annular frame 2 and the respective shoe 6 (figure 3A). The gripping ring 1 thus comprises a plurality of actuators 8 that are independent from each other, one for each gripping member 5. Each shoe 6 is actuated and moved by an actuator 8 thereof, independent of the actuators of the other shoes.

Each actuator 8 is configured to generate, independently of the other actuators, an operating motion of the shoe 6 between the first radial position and the second radial position. Such operating motion of the shoe is independent of the operating motion of the other shoes.

Each gripping member 5 is associated with a position transducer 9. Preferably the position transducer 9 is associated with a shoe 6, still more preferably the position transducer 9 is associated with the actuator 8. Each position transducer 9 is configured to generate a position signal S1 indicative of the radial position of the respective shoe during the operating motion. As an alternative with respect to that illustrated, other types of position transducers 9 can be provided, for example the position transducer 9 can be made by means of an external sensor capable of detecting the radial position of the shoe 6.

The actuator 8 can be of electric type and in particular it can comprise an electric motor. As for example illustrated in the enclosed figures, the electric actuator 8 comprises a rotary electric motor 10, preferably a brushless motor. Between the rotary electric motor 10 and the shoe 6, an an electric axle 11 is operatively interposed in order to convert the rotary motion exiting from the rotary electric motor 10 into a rectilinear motion of the shoe 6. Such conversion is for example attained by means of a screw/nut screw coupling. As is illustrated for example in the enclosed figures, the electric axle 11 comprises a slide 11a integral with the shoe 6 and slidable along a rectilinear guide 11b integral with the annular frame 2.

As is illustrated for example in the enclosed figures, the rotary electric motor 10 is associated with the position transducer 9, preferably an encoder.

As an alternative with respect to that illustrated, other types of actuators 8 can be provided, for example comprising a linear electric motor directly interposed between the annular frame 2 and the shoe 6. In this case, preferably, the electric axle is not present and the linear electric motor is preferably directly connected to the shoe 6.

Each gripping member 5 is associated with a force transducer 12. The force transducer 12 is configured to generate a force signal S2 indicative of the force exchanged between each shoe 6 and the annular tyre structure 200 during the operating motion of the shoe itself.

Preferably the force transducer 12 is a load cell operating under traction or compression. Alternatively the force transducer 12 can be made by means of a strain gauge (not illustrated) directly applied on each shoe 6.

As is illustrated for example in the enclosed figures, the force transducer 12 can be interposed between the shoe 6 and the actuator 8. Preferably, in accordance with the previously-described example, the force transducer 12 is interposed between the electric axle 11 and the shoe 6, still more preferably between the slide 11a and the shoe 6.

The gripping ring 1 comprises an end stop 13 corresponding to a radial adjustment position of the shoes 6. The end stop 13 is arranged in radially outer position. The end stop 13 can for example be made form a fixed portion of the gripping member 5 or it can be made for example from a circumferential surface of the annular frame 2. As is illustrated for example in the enclosed figures, the end stop 13 can be made from a head surface of the electric axle 11 and in particular of the rectilinear guide 11b.

The handling apparatus comprises a monitoring system comprising at least one electronic monitoring module 14.

In accordance with a possible embodiment, the monitoring system comprises each position transducer 9. The electronic monitoring module 14 is configured to receive the position signal S1 generated by each position transducer 9. In this case the monitoring system is configured to perform a position monitoring, through which the radial position of each shoe 6 is monitored during the respective operating motion.

In accordance with a possible embodiment, the monitoring system comprises each force transducer 12. The electronic monitoring module 14 is configured to receive the force signal S2 generated by each force transducer 12. In this case the monitoring system is configured to perform a force monitoring, through which the force exchanged between each shoe 6 and the annular tyre structure 200 is monitored during the operating motion of each shoe 6.

Preferably the monitoring system is configured to perform a position monitoring and a force monitoring.

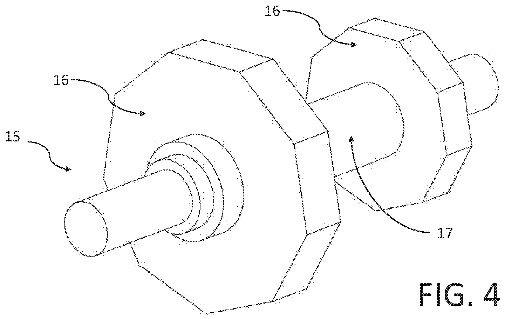

With reference to figure 4, with 15 an adjustment member is illustrated comprising at least one flange 16 and preferably a central shaft 17 on which the flange 16 is mounted. The flange 16 has transverse dimension corresponding to a radial adjustment position of the shoes 6. The flange 16 preferably has a polygonal shape with number of sides equal to the number of shoes 6 of the gripping ring 1.

Preferably, two or more flanges 16 are provided that are arranged on the same central axis 17 and having transverse dimensions different from each other and respectively corresponding to a radial adjustment position of the shoes 6.

The use of the handling apparatus implements a method for handling an annular tyre structure 200 during which each shoe 6 is subjected to the operating motion generated by the respective actuator 8, independently of the other actuators.

In order to grip the annular tyre structure 200, each shoe 6 is initially arranged in the first radial position.

The annular tyre structure 200, wound on the drum 300, is arranged within the plurality of shoes 6 and coaxial with the central axis 3 (figure 3A).

If the annular tyre structure 200 is an outer sleeve 201, the drum 300 is preferably an auxiliary drum 302.

If the annular tyre structure 200 is a carcass sleeve 202, the drum 300 is preferably a building drum 301.

If the annular tyre structure 200 is an assembly 203 consisting of the carcass sleeve arranged coaxially and in radially inner position with respect to the outer sleeve, the drum 300 is preferably a shaping drum 303.

If the annular tyre structure 200 is the green tyre 204, the drum 300 is preferably a shaping drum 303.

Each shoe 6 is actuated and moved independently of each other in order to generate an operating closing motion which, starting from the first radial position, brings the shoes into the second radial position. Such operating closing motion is for example generated by means of the actuators 8. The operating closing stroke carried out by each shoe 6 following the operating closing motion was indicated with the reference "X" (figure 3C).

It is preferably provided to divide the operating closing stroke "X" into an approach stroke X1 and a tracking stroke X2. Initially, the approach stroke X1 is executed which brings the shoes 6 from the first radial position to a radial contact position in which the gripping surfaces 7 come into contact with the annular tyre structure 200 (figures 3B-3C).

Subsequently, the tracking stroke X2 is executed which brings the shoes 6 from the radial contact position to the second radial position (figure 3C). Simultaneously with the tracking stroke X2, an initial step of radial contraction of the drum 300 is executed. Preferably the gripping surfaces 7 remain in contact with the annular tyre structure 200 during the tracking stroke X2.

The operating closing motion of the shoes 6 is interrupted when the shoes are found in the second radial position. Preferably the shoes 6 are locked in the second radial position.

The radial contraction of the drum 300 continues until reaching a radial dimension suitable for the axial extraction of the drum 300 from the annular tyre structure 200.

The radially contracted drum 300 is axially extracted from the annular tyre structure 200 held by the shoes 6 (figure 3C).

In order to release the annular tyre structure 200, each shoe 6, initially arranged in the second radial position, is actuated and moved according to an operating opening motion opposite the operating closing motion until reaching the first radial position. Preferably also the operating opening motion is generated independently for each shoe 6. Preferably also the operating opening motion is generated by means of the actuators 8.

At least in the course of the operating closing motion, a position monitoring can be carried out through which the radial position of each shoe 6 is monitored.

Preferably the position monitoring provides for detecting the radial position of each shoe 6. The monitoring system is preferably configured to perform such detection for example by sending the position signal S1 to the electronic monitoring module 14.

The detected radial position is compared with at least one reference value. The monitoring system, and in particular the electronic monitoring module 14, is configured to perform such comparison.

The reference value can be an absolute reference value, i.e. a specific radial position which the shoe 6 must take on.

The reference value can be a relative reference value, i.e. the radial positions taken on by the other shoes 6. In this case the detected radial positions of the shoes 6 are compared with each other and each detected radial position defines the reference value for the detected radial positions of the other shoes.

The detected radial position is preferably compared both with the absolute reference value and with the relative reference value. As a function of the position monitoring, if deviations are detected with respect to the reference values, a control action is executed. For example, the monitoring system, and in particular the electronic monitoring module 14, is configured to generate a drive signal S3 for performing such control action.

The control action can provide for controlling at least the operating closing motion as a function of the position monitoring. For example, it is possible to make independent adjustments of each shoe for the achievement of a defined position and/or to make independent adjustments of each shoe in order to maintain the synchronism between the shoes, above all in the step of abutment against the annular tyre structure 200. Preferably, when the detected radial position of one or more shoes 6 deviates from the reference value, the control action comprises the action of driving the respective actuators 8 to restore the reference value of the radial position, i.e. to radially move the shoes 6 until reaching the reference value of the radial position. For example, the monitoring system, and in particular the electronic monitoring module 14, is configured to generate the drive signal S3 directed to one or more of the actuators 8 so as to drive the actuators themselves to restore the reference value of the radial position, when the detected radial position deviates from the reference value.

In accordance with a further example, the monitoring shows the presence of defects, which can be eliminated by intervening on the building and/or by managing possible maintenance or adjustment interventions as described hereinbelow.

The control action can provide for signalling or activating a maintenance intervention or an adjustment intervention of a station or of a device 101 for building the annular tyre structure 200, when the detected radial position deviates from the reference value. For example, the monitoring system, and in particular the electronic monitoring module 14, is configured to generate the drive signal S3 directed to a control unit 103 of the plant 100 so as to signal or activate a maintenance intervention or an adjustment intervention of a station or of a device 101 of the plant 100, when the detected radial position deviates from the reference value. In particular, the control action can comprise signalling or activating a maintenance intervention or an adjustment intervention of the gripping ring itself.

The adjustment intervention of the gripping ring can provide for releasing the annular tyre structure and performing an adjustment motion opposite the operating closing motion until the shoes abut against the end stop 13.

The adjustment intervention of the gripping ring can provide for releasing the annular tyre structure and performing an adjustment motion in accordance with the operating closing motion until the shoes abut against the flange 16 of the adjustment member 15 suitably inserted in position coaxial and radially inner with respect to the shoes 6.

The control action can provide for signalling or activating an adjustment intervention of a step for building the annular tyre structure, preferably when the detected radial position deviates from the reference value. For example, the monitoring system, and in particular the electronic monitoring module 14, is configured to generate the drive signal S3 directed to a control unit 103 of the plant 100 so as to signal or activate an adjustment intervention of a building step actuated in the plant itself, when the detected radial position deviates from the reference value.

At least in the course of the operating closing motion, a force monitoring can be carried out, through which the force exchanged between each shoe 6 and the annular tyre structure 200 is monitored.

In particular, the force exchanged between each shoe 6 and the annular tyre structure 200 is detected following the mutual interaction.

The monitoring system is preferably configured to perform such detection by means of the force transducers 12, for example by sending the force signal S2 to the electronic monitoring module 14. Alternatively, if each actuator 8 comprises an electric motor, the monitoring system can be configured for performing a torque control of the electric motor in order to carry out the force monitoring. In this case, therefore, the action of detecting the force exchanged between each shoe 6 and the annular tyre structure 200 comprises the action of performing a torque control of the electric motor.

The detected exchanged force is compared with at least one reference value. The monitoring system, and in particular the electronic monitoring module 14, is configured to perform such comparison.

The reference value can be an absolute reference value, i.e. a specific force that the shoe 6 and the annular tyre structure 200 must exchange following the mutual interaction.

The reference value can be a relative reference value, i.e. the exchanged forces detected for each shoe. In this case the exchanged forces detected for each shoe are compared with each other and each exchanged force detected at a shoe defines the reference value for detected exchanged forces of the other shoes.

The detected exchanged force is preferably compared both with the absolute reference value and with the relative reference value.

As a function of the force monitoring, if the monitoring detects deviations with respect to the reference values, a control action is executed from among those described above. For example, the monitoring system, and in particular the electronic monitoring module 14, is configured to generate the drive signal S3 for performing such control action.

The control action can provide for controlling at least the operating closing motion as a function of the force monitoring. For example, it is possible to make independent adjustments of each shoe for the achievement of a defined force and/or make independent adjustments of each shoe in order to maintain the synchronism between the shoes, above all in the step of abutment against the annular tyre structure.

Preferably, when the detected exchanged force deviates from the reference value, the control action comprises driving the actuators 8 to restore the reference value of the exchanged force. For example, the monitoring system, and in particular the electronic monitoring module 14, is configured to generate the drive signal S3 directed to one or more of the actuators 8 so as to drive the actuators themselves to restore the reference value of the exchanged force, when the detected exchanged force deviates from the reference value.

In accordance with a further example, the monitoring shows the presence of defects, which can be eliminated by intervening on the building and/or managing possible maintenance or adjustment interventions as described below.

The control action can provide for signalling or activating a maintenance intervention or an adjustment intervention of a station or of a device 101 for building the annular tyre structure 200, preferably when the detected exchanged force deviates from the reference value. For example, the monitoring system, and in particular the electronic monitoring module 14, is configured to generate the drive signal S3 to a control unit 103 of the plant 100 so as to signal or activate a maintenance intervention or an adjustment intervention of a station or of a device 101 of the plant 100, when the detected exchanged force deviates from the reference value. In particular, the control action can comprise signalling or activating a maintenance intervention or an adjustment intervention of the gripping ring itself.

The adjustment intervention of the gripping ring can provide for releasing the annular tyre structure and performing an adjustment motion opposite the operating closing motion until the shoes abut against the end stop 13.

The adjustment intervention of the gripping ring can provide for releasing the annular tyre structure and performing an adjustment motion in accordance with the operating closing motion until the shoes abut against the flange 16 of the adjustment member 15 suitably inserted in position coaxial and radially inner with respect to the shoes 6.

The control action can provide for signalling or activating an adjustment intervention of a step for building the annular tyre structure, preferably when the detected exchanged force deviates from the reference value. For example, the monitoring system, and in particular the electronic monitoring module 14, is configured to generate the drive signal S3 directed to a control unit 103 of the plant 100 so as to signal or activate an adjustment intervention of a building step actuated in the plant itself, when the detected exchanged force deviates from the reference value.

The position monitoring and the force monitoring are used for detecting the achievement of the radial contact position of the shoes 6 when the approach stroke X1 of the operating closing motion is executed.

Preferably, at least in the course of the operating closing motion, a position monitoring is carried out, through which the radial position of each shoe 6 is monitored, and a force monitoring is carried out, through which the force exchanged between each shoe 6 and the annular tyre structure 200 is monitored.

In accordance with a possible application, the handling apparatus can be a component of a shaping machine 400 or be operatively associated therewith within the plant 100. Preferably the handling apparatus is arranged in fixed position on the shaping machine 400.

The shaping machine 400 also comprises a mandrel 401 arranged coaxial with the gripping ring 1 of the handling apparatus, along a shaping axis 402.

Preferably the shaping machine 400 comprises a rectilinear guide 403 parallel to the shaping axis 402 and the mandrel 401 is axially movable along this in approaching the gripping ring 1 and in moving away from the gripping ring 1. Preferably the gripping ring 1 is arranged at one end of the rectilinear guide 403.

With 404, a discharge handler is indicated for discharging the green tyre from the shaping machine 400.

The gripping ring 1 is adapted to receive at least one outer sleeve 201 of a tyre being processed. The mandrel 401 is adapted to receive a carcass sleeve 202 of a tyre being processed. In accordance with a possible embodiment, the mandrel 401 is stably associated with a shaping drum 303 and only receives the carcass sleeve 202. Alternatively the mandrel 401 is configured to receive a building drum 301 on which the carcass sleeve 202 is arranged. In this case the building drum 301 is adapted to operate as a shaping drum 303 in the shaping machine 400.

Following the insertion of the carcass sleeve 202 in a coaxial and radially inner position with respect to the outer sleeve 201, the gripping ring 1 is adapted to perform the function of radially outer opposition during the shaping of the carcass sleeve. Preferably the shaping machine 400 comprises the adjustment member 15 in which the central shaft 17 is adapted to be mounted on the mandrel 401 in order to carry out an adjustment intervention of the gripping ring 1.

The operation of the plant 100 comprising the shaping machine 400 implements a process for building green tyres in accordance with the following description.

In accordance with such process, the outer sleeve 201 is built on the auxiliary drum 302 and the carcass sleeve 202 on the building drum 301.

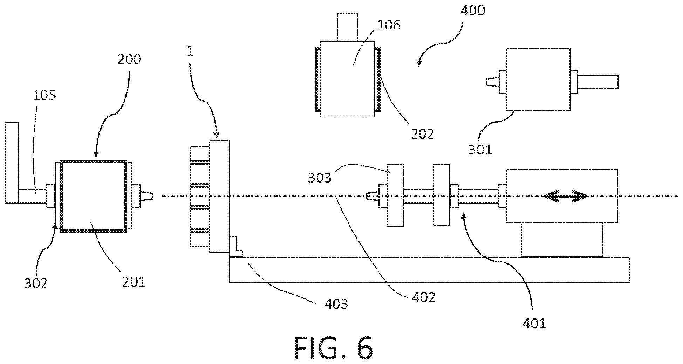

At the end of the building, for example by means of a handler 105, the auxiliary drum 302 carrying the outer sleeve 201 is arranged coaxial with respect to the gripping ring 1, preferably on the opposite side with respect to the mandrel 401 (figure 6). The auxiliary drum 302 carrying the outer sleeve 201 is axially inserted within the gripping ring 1 up to bringing the outer sleeve 201 in radially inner position with respect to the shoes 6. The outer sleeve 201 thus represents an annular tyre structure 200, in particular a first annular tyre structure.

By applying a method for handling an annular tyre structure as described above, the outer sleeve 201 is gripped by the gripping ring 1 by means of the plurality of shoes 6. In this case the control action which is executed as a function of the position monitoring, in combination or not in combination with the force monitoring, is related to gripping conditions of the outer sleeve and/or to building conditions of the outer sleeve.

Preferably, the provided sequence of actions relative to the handling of the outer sleeve 201 can comprise the following:
- gripping ring 1 open while waiting, with the shoes 6 arranged in the first radial position,
- inserting the outer sleeve 201 coaxial and in radially inner position with respect to the shoes 6,
- activating the actuators 8 in order to close the shoes 6, generating the approach stroke X1 of the operating closing motion,
- checking the radial position of each shoe 6, for example by means of reading the encoder of the electric motor,
- checking synchronism in the radial positioning of the shoes 6,
- checking the exchanged force from the outer sleeve 201 on each shoe,
- radially closing the auxiliary drum 302 and dynamic tracking between shoes 6 (tracking stroke X2) and auxiliary drum 302,
- locking, in the second radial position, the shoes which hold the outer sleeve 201,
- extracting the auxiliary drum 302.

Each check can make the need for adjustments of the positioning of a single shoe, of the mutual positioning of the shoes or of the outer sleeve with respect to the shoes, emerge. Each check can also make the presence of geometric defects of the outer sleeve, such as size defects and/or shape defects, emerge, or it can make building defects of the outer sleeve emerge.

At the end of the building, the carcass sleeve 202 is picked up from the building drum 301, for example by means of a handler 106, and positioned on the mandrel 401 of the shaping machine 400. Preferably the carcass sleeve 202 is positioned on the shaping drum 303 of the shaping machine 400. Alternatively the carcass sleeve 202 can be arranged on the mandrel 401, remaining associated with the building drum 301 which performs the function of shaping drum 303 within the shaping machine 400.

The mandrel 401 carrying the carcass sleeve 202 axially translates up to arranging the carcass sleeve 202 coaxial and in radially inner position with respect to the outer sleeve 201, forming the assembly 203 which defines a second annular tyre structure.

The carcass sleeve 202 is shaped within the outer sleeve 201 while the shoes 6 of the gripping ring 1 are locked in the second radial position and act as an abutment to the shaping.

During the shaping of the carcass sleeve 202, a force monitoring is applied to the second annular tyre structure as described above, through which the force exchanged between each shoe 6 and the second annular tyre structure is monitored.

In this case the control action which is executed as a function of the force monitoring is related to shaping conditions of the carcass sleeve and/or to building conditions of the outer sleeve or of the carcass sleeve.

Preferably, the provided sequence of actions relative to the handling of the carcass sleeve 202 and of the second annular tyre structure can comprise the following:
- inserting the carcass sleeve 202 arranged on the shaping drum 303 in radially inner position and coaxial with respect to the outer sleeve 201 and to the shoes 6,
- shaping the carcass sleeve by means of mutual axial approaching of the beads and simultaneous introduction of pressurised fluid at its interior,
- checking the exchanged force from the second annular tyre structure on each shoe.

Such check can make the presence of defects of the outer sleeve, of the carcass sleeve or of the assembly generated following the shaping of the carcass sleeve, emerge. Such defects can be size defects and/or shape defects, building defects of the outer sleeve and/or of the inner sleeve, coupling defects between the outer sleeve and the inner sleeve.

At the end of the shaping, an operating opening motion of the shoes 6 is generated that is opposite the operating closing motion, and the mandrel 401 carrying the second annular structure is made to translate until it is arranged in the rolling station 102.

The second annular tyre structure is then subjected to rolling in a position outside the gripping ring 1 in order to obtain a green tyre that defines a third annular tyre structure.

At the end of the rolling, the mandrel 401 carrying the green tyre is made to translate until it is once again arranged coaxial and in radially inner position with respect to the shoes 6.

By applying a method for handling an annular tyre structure as described above, the green tyre, i.e. the third annular tyre structure, is then gripped by means of the plurality of shoes 6.

In this case the control action that is executed as a function of the position monitoring, in combination or not in combination with the force monitoring, is related to gripping conditions of the green tyre and/or to building conditions of the green tyre. Preferably, the provided sequence of actions relative to the handling of the second and third annular tyre structure can comprise the following:
- activating the actuators 8 in order to open the shoes 6, generating the operating opening motion,
- extracting the shaping drum 303 carrying the second annular tyre structure,
- rolling the second annular tyre structure,
- inserting the green tyre arranged on the forming drum 303 in radially inner position and coaxial with respect to the shoes 6,
- activating the actuators 8 in order to close the shoes 6, generating the operating closing motion,
- checking the radial position of each shoe 6, for example by means of reading the encoder of the electric motor,
- checking the synchronism in the radial positioning of the shoes 6,
- checking the exchanged force from the green tyre on each shoe 6,
- discharging the pressurised fluid and radially closing the shaping drum 303,
- extracting the shaping drum 303 while the shoes 6 hold the green tyre,
- the discharge handler entering into the green tyre,
- discharging the green tyre from the shaping machine 400.

In accordance with that described, the handling apparatus allows eliminating the clearances in the positioning of the shoes encountered with the known mechanisms, while maintaining a synchronised centripetal movement (and possibly centrifugal movement) between the shoes.

It is possible to monitor the position of each shoe 6 in particular during the gripping cycle, even if it is possible to extend the monitoring also to the transfer and release cycles. Such monitoring allows controlling and increasing the quality of the tyres and managing maintenance/adjustment interventions.

It is also possible to monitor the force with which each shoe actually interacts with the annular tyre structure, for example in order to check the correct contact.

It is possible to check that the concentricity between the axis of the gripping ring and the annular tyre structure is maintained within the tolerances provided with each cycle, and if it is necessary to carry out an adjustment intervention of the gripping ring, it is sufficient to proceed through a zeroing of the position of the actuators, and in particular of the electric motors, bringing the shoes against a radially outer end stop or thrusting against the adjustment member arranged in fixed position.

## Claims

1. Handling apparatus for handling an annular tyre structure (200), said handling apparatus comprising:
- a gripping ring (1) comprising:
an annular frame (2),
a plurality of gripping members (5) mounted on the annular frame (2) and distributed according to a circumferential direction of the annular frame itself,
wherein each gripping member (5) of said plurality of gripping members (5) comprises a shoe (6) movable between a plurality of radial positions with respect to the annular frame (2) and having a gripping surface (7) facing a central axis (3) of the gripping ring (1), said gripping surface (7) being intended to come into contact with a radially outer surface (205) of said annular tyre structure (200),
wherein the gripping surfaces (7) of said plurality of gripping members (5) are arranged in a circumferential direction with respect to the central axis (3),
**characterised in that** each gripping member (5) comprises an actuator (8) interposed between the annular frame (2) and the respective shoe (6) and configured to generate, independently of the other actuators, an operating motion of the shoe (6) between said plurality of radial positions, the operating motion of one shoe (6) being independent of the operating motion of the other shoes;
- a monitoring system configured to perform a position monitoring, through which the radial position of each shoe (6) is monitored during the operating motion of each shoe (6).

2. Handling apparatus according to claim 1, wherein said monitoring system comprises for each gripping member (5) a position transducer (9) configured to generate a position signal (S1) indicative of the radial position of the respective shoe (6), said monitoring system comprising at least one electronic monitoring module (14) configured to receive said position signal (S1).

3. Handling apparatus according to one or more of the preceding claims, wherein said monitoring system is configured to carry out a force monitoring, by means of which the force exchanged between each shoe (6) and the annular tyre structure (200) is monitored during the operating motion of each shoe (6).

4. Handling apparatus according to claim 3, wherein said monitoring system comprises for each gripping member (5) a force transducer (12) configured to generate a force signal (S2) indicative of the force exchanged between each shoe (6) and the annular tyre structure (200) during said operating motion, said monitoring system comprising at least one electronic monitoring module (14) configured to receive said force signal (S2).

5. Handling apparatus according to one or more of the preceding claims, comprising a number of shoes (6) different from a number of vulcanisation sectors of a vulcanisation mould (200) arranged downstream of the handling apparatus, or from a multiple or a submultiple of said number of vulcanisation sectors of a vulcanisation mould (200) arranged downstream of the handling apparatus, and/or comprising a number of shoes (6) different from a number of drum building sectors (300) used for building, or from a multiple or a submultiple of said number of drum building sectors (300) used for building.

6. Shaping machine (400) comprising a handling apparatus according to one or more of the preceding claims, wherein said gripping ring (1) is adapted to receive at least an outer sleeve (201), and a mandrel (401) adapted to receive a carcass sleeve (202), wherein said handling apparatus is arranged in a fixed position on the shaping machine (400) and said mandrel (401) is axially movable approaching and away from the gripping ring (1).

7. Method for handling an annular tyre structure (200), said method comprising:
- arranging a plurality of shoes (6) distributed according to a circumferential direction around a central axis (3), each shoe (6) of said plurality of shoes (6) being movable between a plurality of radial positions and having a gripping surface (7) facing said central axis (3), wherein the gripping surfaces (7) of said plurality of shoes (6) are arranged in a circumferential direction with respect to the central axis (3), each shoe (6) being arranged in a first radial position adapted to receive an annular tyre structure (200) to be handled,
- arranging said annular tyre structure (200) wound on a drum (300) inside the plurality of shoes (6) and coaxial with said central axis (3),
- operating and moving each shoe (6) independently of each other to generate an operating closing motion which, starting from the first radial position, brings said shoes (6) to a second radial position in which said gripping surfaces (7) are in contact with the annular tyre structure (200) and hold it,
- carrying out a position monitoring, through which the radial position of each shoe (6) is monitored at least during the operating closing motion of each shoe (6),
- radially contracting the drum (300) and extracting it axially from the annular tyre structure (200) held by the shoes (6).

8. Method for handling an annular tyre structure (200) according to claim 7, comprising performing a control action according to said position monitoring, said control action comprising one or more of:
- controlling at least said operating closing motion as a function of said position monitoring,
- signalling or activating a maintenance intervention or an adjustment intervention of a station or of a device (101) for building the annular tyre structure (200),
- signalling or activating an adjustment intervention of a building step of the annular tyre structure (200).

9. Method for handling an annular tyre structure (200) according to one or more of claims 7 to 8, said method comprising:
performing a force monitoring, by means of which the force exchanged between each shoe (6) and the annular tyre structure (200) is monitored at least during the operating closing motion of each shoe (6).

10. Method for handling an annular tyre structure (200) according to claim 9, comprising performing a control action according to said position monitoring and according to said force monitoring, said control action comprising one or more of:
- controlling at least said operating closing motion as a function of said position monitoring and of said force monitoring,
- signalling or activating a maintenance intervention or an adjustment intervention of a station or of a device (101) for building the annular tyre structure (200),
- signalling or activating an adjustment intervention of a building step of the annular tyre structure (200).

11. Method for handling an annular tyre structure (200) according to one or more of claims 7 to 10, comprising:
- performing an approach stroke (X1) of said operating closing motion which brings the shoes (6) from the first radial position to a radial contact position in which the gripping surfaces (7) come into contact with the annular tyre structure (200),
- detecting the achievement of said radial contact position of the shoes by means of said position monitoring and said force monitoring,
- simultaneously performing an initial step of the radial contraction of the drum (300) and a tracking stroke (X2) of said operating closing motion which brings the shoes (6) from the radial contact position to the second radial position,
- stopping said operating closing motion when said shoes (6) are in the second radial position and continuing the radial contraction of the drum (300) until reaching a radial dimension suitable for the axial extraction of the drum (300) from the annular tyre structure (200).

12. Process for building green tyres, including:
- building a carcass sleeve (202) on a building drum (301),
- building an outer sleeve (201) on an auxiliary drum (302),
- gripping said outer sleeve (201) by means of a plurality of shoes (6) of a gripping ring (1) of a shaping machine (400), by applying a method for handling an annular tyre structure according to one or more of claims from 7 at 11, wherein said outer sleeve (201) defines a first annular tyre structure,
- shaping the carcass sleeve (202) inside the outer sleeve (201) by coupling them mutually,
- carrying out a control action according to said position monitoring, said control action being related to gripping conditions of the outer sleeve (201) and/or to building conditions of the outer sleeve (201).

13. Process for building green tyres according to claim 12, by applying to said outer sleeve (201) a method for handling an annular tyre structure according to one or more of claims 9 to 11, comprising carrying out a control action according to said position monitoring and said force monitoring, said control action being related to gripping conditions of the outer sleeve (201) and/or to building conditions of the outer sleeve (201).

14. Process for building green tyres according to claim 12 or 13, comprising:
- arranging said carcass sleeve (202) on a mandrel (401) of the shaping machine (400), coaxial and in a radially inner position with respect to the outer sleeve (201), wherein an assembly (203) consisting of the carcass sleeve (202) arranged inside the outer sleeve (201) defines a second annular tyre structure,
- shaping said carcass sleeve (202) inside the outer sleeve (201) while the shoes (6) of the gripping ring (1) are locked in the second radial position and act as an abutment to the shaping,
- applying to said second annular tyre structure a method for handling an annular tyre structure according to one or more of claims 9 to 11, monitoring the force exchanged between each shoe (6) and the second annular tyre structure during the shaping of the carcass sleeve (202),
- carrying out a control action according to said position monitoring and said force monitoring, said control action being related to shaping conditions of the carcass sleeve (202) and/or to building conditions of the outer sleeve (201) or of the carcass sleeve (202).

15. Process for building green tyres according to claim 14, comprising:
- rolling said second annular tyre structure outside the gripping ring (1) to obtain a green tyre,
- gripping said green tyre by means of said plurality of shoes (6) by applying a method for handling an annular tyre structure according to one or more of claims 7 to 11, wherein said green tyre defines a third annular tyre structure,
- carrying out a control action according to said position monitoring, said control action being related to gripping conditions of the green tyre and/or to building conditions of the green tyre,
- by applying to said green tyre a method for handling an annular tyre structure according to one or more of claims 9 to 11, comprising carrying out a control action according to said position monitoring and said force monitoring, said control action being related to gripping conditions of the green tyre and/or to building conditions of the green tyre.

## Patentansprüche

1. Handhabungsvorrichtung zum Handhaben einer ringförmigen Reifenstruktur (200), wobei die Handhabungsvorrichtung umfasst:
- einen Greifring (1), umfassend:
einen ringförmigen Rahmen (2),
eine Vielzahl von Greifelementen (5), die an dem ringförmigen Rahmen (2) angebracht und entsprechend einer Umfangsrichtung des ringförmigen Rahmens selbst verteilt sind,
wobei jedes Greifelement (5) der Vielzahl von Greifelementen (5) einen Schuh (6) umfasst, der zwischen einer Vielzahl von radialen Positionen in Bezug auf den ringförmigen Rahmen (2) beweglich ist und eine Greiffläche (7) aufweist, die einer zentralen Achse (3) des Greifrings (1) zugewandt ist, wobei die Greiffläche (7) dazu bestimmt ist, in Kontakt mit einer radial äußeren Oberfläche (205) der ringförmigen Reifenstruktur (200) zu kommen,
wobei die Greifflächen (7) der Vielzahl von Greifelementen (5) in einer Umfangsrichtung in Bezug auf die Mittelachse (3) ausgelegt sind,
**dadurch gekennzeichnet, dass** jedes Greifelement (5) einen Aktuator (8) umfasst, der zwischen dem ringförmigen Rahmen (2) und dem jeweiligen Schuh (6) angeordnet und dafür konfiguriert ist, unabhängig von den anderen Aktuatoren eine Betriebsbewegung des Schuhs (6) zwischen der Vielzahl von radialen Positionen zu erzeugen, wobei die Betriebsbewegung eines Schuhs (6) unabhängig von der Betriebsbewegung der anderen Schuhe ist;
- ein Überwachungssystem, das dafür konfiguriert ist, eine Positionsüberwachung durchzuführen, durch die die radiale Position jedes Schuhs (6) während der Betriebsbewegung jedes Schuhs (6) überwacht wird.

2. Handhabungsvorrichtung nach Anspruch 1, wobei das Überwachungssystem für jedes Greifelement (5) einen Positionswandler (9) umfasst, der dafür konfiguriert ist, ein Positionssignal (S1) zu erzeugen, das die radiale Position des jeweiligen Schuhs (6) anzeigt, wobei das Überwachungssystem mindestens ein elektronisches Überwachungsmodul (14) umfasst, das dafür konfiguriert ist, das Positionssignal (S1) zu empfangen.

3. Handhabungsvorrichtung nach einem oder mehreren der vorhergehenden Ansprüche, wobei das Überwachungssystem dafür konfiguriert ist, eine Kraftüberwachung durchzuführen, mittels derer die zwischen jedem Schuh (6) und der ringförmigen Reifenstruktur (200) ausgetauschte Kraft während der Betriebsbewegung jedes Schuhs (6) überwacht wird.

4. Handhabungsvorrichtung nach Anspruch 3, wobei das Überwachungssystem für jedes Greifelement (5) einen Kraftwandler (12) umfasst, der dafür konfiguriert ist, ein Kraftsignal (S2) zu erzeugen, das die zwischen jedem Schuh (6) und der ringförmigen Reifenstruktur (200) während der Arbeitsbewegung ausgetauschte Kraft anzeigt, wobei das Überwachungssystem mindestens ein elektronisches Überwachungsmodul (14) umfasst, das dafür konfiguriert ist, das Kraftsignal (S2) zu empfangen.

5. Handhabungsvorrichtung nach einem oder mehreren der vorhergehenden Ansprüche, die eine Anzahl von Schuhen (6) umfasst, die sich von einer Anzahl von Vulkanisationssektoren einer stromabwärts der Handhabungsvorrichtung ausgelegten Vulkanisationsform (200) oder von einem Vielfachen oder einem Untervielfachen der Anzahl von Vulkanisationssektoren einer stromabwärts der Handhabungsvorrichtung ausgelegten Vulkanisationsform (200) unterscheidet, und/oder die eine Anzahl von Schuhen (6) umfasst, die sich von einer Anzahl von zum Aufbau verwendeten Trommelaufbausektoren (300) oder von einem Vielfachen oder einem Untervielfachen der Anzahl von zum Aufbau verwendeten Trommelaufbausektoren (300) unterscheidet.

6. Formgebungsmaschine (400), die eine Handhabungsvorrichtung nach einem oder mehreren der vorhergehenden Ansprüche umfasst, wobei der Greifring (1) dafür ausgelegt ist, mindestens eine äußere Hülse (201) aufzunehmen, und ein Dorn (401) dafür ausgelegt ist, eine Karkassenhülse (202) aufzunehmen, wobei die Handhabungsvorrichtung in einer festen Position an der Formgebungsmaschine (400) angeordnet ist und der Dorn (401) axial zu dem Greifring (1) hin und von diesem weg bewegbar ist.

7. Verfahren zur Handhabung einer ringförmigen Reifenstruktur (200), wobei das Verfahren folgendes umfasst:
- Anordnen einer Vielzahl von Schuhen (6), die in einer Umfangsrichtung um eine zentrale Achse (3) herum verteilt sind, wobei jeder Schuh (6) der Vielzahl von Schuhen (6) zwischen einer Vielzahl von radialen Positionen beweglich ist und eine Greiffläche (7) aufweist, die der zentralen Achse (3) zugewandt ist, wobei die Greifflächen (7) der Vielzahl von Schuhen (6) in einer Umfangsrichtung in Bezug auf die zentrale Achse (3) angeordnet sind, wobei jeder Schuh (6) in einer ersten radialen Position angeordnet ist, die dafür ausgelegt ist, eine zu handhabende ringförmige Reifenstruktur (200) aufzunehmen,
- Anordnen der ringförmigen Reifenstruktur (200), die auf eine Trommel (300) gewickelt ist, innerhalb der Vielzahl von Schuhen (6) und koaxial zu der Mittelachse (3),
- Betätigen und Bewegen jedes Schuhs (6) unabhängig voneinander, um eine operative Schließbewegung zu erzeugen, die, ausgehend von der ersten radialen Position, die Schuhe (6) in eine zweite radiale Position bringt, in der die Greifflächen (7) in Kontakt mit der ringförmigen Reifenstruktur (200) sind und diese halten,
- Durchführen einer Positionsüberwachung, durch die die radiale Position jedes Schuhs (6) mindestens während der operativen Schließbewegung jedes Schuhs (6) überwacht wird,
- Radiales Zusammenziehen der Trommel (300) und ihr axiales Herausziehen aus der von den Schuhen (6) gehaltenen ringförmigen Reifenstruktur (200).

8. Verfahren zum Handhaben einer ringförmigen Reifenstruktur (200) nach Anspruch 7, das das Ausführen einer Steueraktion in Abhängigkeit von der Positionsüberwachung umfasst, wobei die Steueraktion eines oder mehrere der Folgenden umfasst:
- Steuern mindestens der operativen Schließbewegung in Abhängigkeit von der Positionsüberwachung,
- Signalisieren oder Aktivieren eines Wartungseingriffs oder eines Einstellungseingriffs einer Station oder einer Vorrichtung (101) zum Aufbau der ringförmigen Reifenstruktur (200),
- Signalisieren oder Aktivieren eines Einstellungseingriffs eines Aufbauschritts der ringförmigen Reifenstruktur (200).

9. Verfahren zur Handhabung einer ringförmigen Reifenstruktur (200) nach einem oder mehreren der Ansprüche 7 bis 8, wobei das Verfahren umfasst:
Durchführen einer Kraftüberwachung, mittels derer die zwischen jedem Schuh (6) und der ringförmigen Reifenstruktur (200) ausgetauschte Kraft mindestens während der operativen Schließbewegung jedes Schuhs (6) überwacht wird.

10. Verfahren zum Handhaben einer ringförmigen Reifenstruktur (200) nach Anspruch 9, das das Ausführen einer Steueraktion nach Maßgabe der Positionsüberwachung und nach Maßgabe der Kraftüberwachung umfasst, wobei die Steueraktion eines oder mehrere der Folgenden umfasst:
- Steuern mindestens der operativen Schließbewegung in Abhängigkeit von der Positionsüberwachung und der Kraftüberwachung,
- Signalisieren oder Aktivieren eines Wartungseingriffs oder eines Einstellungseingriffs einer Station oder einer Vorrichtung (101) zum Aufbau der ringförmigen Reifenstruktur (200),
- Signalisieren oder Aktivieren eines Einstellungseingriffs eines Aufbauschritts der ringförmigen Reifenstruktur (200).

11. Verfahren zur Handhabung einer ringförmigen Reifenstruktur (200) nach einem oder mehreren der Ansprüche 7 bis 10, wobei das Verfahren umfasst:
- Ausführen eines Annäherungshubs (X1) der operativen Schließbewegung, der die Schuhe (6) aus der ersten radialen Position in eine radiale Kontaktposition bringt, in der die Greifflächen (7) in Kontakt mit der ringförmigen Reifenstruktur (200) kommen,
- Erfassen des Erreichens der radialen Kontaktposition der Schuhe mit Hilfe der Positionsüberwachung und der Kraftüberwachung,
- gleichzeitiges Ausführen eines Anfangsschritts der radialen Kontraktion der Trommel (300) und eines Nachführhubs (X2) der operativen Schließbewegung, der die Schuhe (6) von der radialen Kontaktposition in die zweite radiale Position bringt,
- Anhalten der operativen Schließbewegung, wenn sich die Schuhe (6) in der zweiten radialen Position befinden, und Fortsetzen des radialen Zusammenziehens der Trommel (300) bis zum Erreichen einer radialen Abmessung, die für das axiale Herausziehen der Trommel (300) aus der ringförmigen Reifenstruktur (200) geeignet ist.

12. Verfahren zur Herstellung von Reifenrohlingen, das enthält:
- Aufbauen einer Karkassenhülse (202) auf einer Aufbautrommel (301),
- Aufbauen einer äußeren Hülse (201) auf einer Hilfstrommel (302),
- Greifen der Außenhülse (201) mittels einer Vielzahl von Schuhen (6) eines Greifrings (1) einer Formgebungsmaschine (400) durch Anwendung eines Verfahrens zur Handhabung einer ringförmigen Reifenstruktur nach einem oder mehreren der Ansprüche 7 bis 11, wobei die Außenhülse (201) eine erste ringförmige Reifenstruktur definiert,
- Formen der Karkassenhülse (202) im Inneren der äußeren Hülse (201) durch gegenseitiges Verbinden derselben,
- Ausführen einer Steueraktion in Abhängigkeit von der Positionsüberwachung, wobei die Steueraktion mit den Greifbedingungen der Außenhülse (201) und/oder mit den Aufbauzuständen der Außenhülse (201) zusammenhängt.

13. Verfahren zum Aufbau von Reifenrohlingen nach Anspruch 12, indem auf die Außenhülse (201) ein Verfahren zur Handhabung einer ringförmigen Reifenstruktur nach einem oder mehreren der Ansprüche 9 bis 11 angewendet wird, das die Durchführung einer Steueraktion nach der Positionsüberwachung und der Kraftüberwachung umfasst, wobei sich die Steueraktion auf die Greifbedingungen der Außenhülse (201) und/oder auf die Aufbaubedingungen der Außenhülse (201) bezieht.

14. Verfahren zum Aufbau von Reifenrohlingen nach Anspruch 12 oder 13, das umfasst:
- Anordnen der Karkassenhülse (202) auf einem Dorn (401) der Formgebungsmaschine (400), koaxial und in einer radial inneren Position in Bezug auf die äußere Hülse (201), wobei eine Anordnung (203), die aus der innerhalb der äußeren Hülse (201) ausgelegten Karkassenhülse (202) besteht, einen zweiten ringförmigen Reifenaufbau definiert,
- Formen der Karkassenhülse (202) im Inneren der äußeren Hülse (201), während die Schuhe (6) des Greifrings (1) in der zweiten radialen Position verriegelt sind und als Widerlager für die Formgebung dienen,
- Anwenden eines Verfahrens zur Handhabung eines ringförmigen Reifenaufbaus nach einem oder mehreren der Ansprüche 9 bis 11 auf den zweiten ringförmigen Reifenaufbau, wobei die zwischen jedem Schuh (6) und dem zweiten ringförmigen Reifenaufbau während der Formgebung der Karkassenhülse (202) ausgetauschte Kraft überwacht wird,
- Ausführen einer Steueraktion in Abhängigkeit von der Positionsüberwachung und der Kraftüberwachung, wobei die Steueraktion mit den Formgebungsbedingungen der Karkassenhülse (202) und/oder mit den Aufbaubedingungen der äußeren Hülse (201) oder der Karkassenhülse (202) in Beziehung steht.

15. Verfahren zum Aufbau von Reifenrohlingen nach Anspruch 14, das umfasst:
- Rollen der zweiten ringförmigen Reifenstruktur außerhalb des Greifrings (1), um einen Reifenrohling zu erhalten,
- Greifen des Reifenrohlings mit Hilfe der Vielzahl von Schuhen (6) durch Anwenden eines Verfahrens zur Handhabung einer ringförmigen Reifenstruktur nach einem oder mehreren der Ansprüche 7 bis 11, wobei der Reifenrohling eine dritte ringförmige Reifenstruktur definiert,
- Ausführen einer Steueraktion in Abhängigkeit von der Positionsüberwachung, wobei die Steueraktion mit den Greifbedingungen des Reifenrohlings und/oder mit den Aufbaubedingungen des Reifenrohlings zusammenhängt,
- indem auf den Reifenrohling ein Verfahren zur Handhabung einer ringförmigen Reifenstruktur nach einem oder mehreren der Ansprüche 9 bis 11 angewendet wird, das die Durchführung einer Steueraktion nach der Positionsüberwachung und der Kraftüberwachung umfasst, wobei sich die Steueraktion auf die Greifbedingungen des Reifenrohlings und/oder auf die Aufbaubedingungen des Reifenrohlings bezieht.

## Revendications

1. Appareil de manipulation pour manipuler une structure de pneu annulaire (200), ledit appareil de manipulation comprenant :
- une bague de préhension (1) comprenant :
un cadre annulaire (2),
une pluralité d'éléments de préhension (5) montés sur le cadre annulaire (2) et distribués selon une direction circonférentielle du cadre annulaire lui-même,
dans lequel chaque élément de préhension (5) de ladite pluralité d'éléments de préhension (5) comprend un sabot (6) mobile entre une pluralité de positions radiales par rapport au cadre annulaire (2) et ayant une surface de préhension (7) faisant face à un axe central (3) de la bague de préhension (1), ladite surface de préhension (7) étant prévue pour entrer en contact avec une surface radialement extérieure (205) de ladite structure de pneu annulaire (200),
dans lequel les surfaces de préhension (7) de ladite pluralité de éléments de préhension (5) sont agencées dans une direction circonférentielle par rapport à l'axe central (3),
**caractérisé en ce que** chaque élément de préhension (5) comprend un actionneur (8) interposé entre le cadre annulaire (2) et le sabot respectif (6) et configuré pour générer, indépendamment des autres actionneurs, un mouvement de fonctionnement du sabot (6) entre ladite pluralité de positions radiales, le mouvement de fonctionnement d'un sabot (6) étant indépendant du mouvement de fonctionnement des autres sabots ;
- un système de surveillance configuré pour réaliser une surveillance de position, par l'intermédiaire de laquelle la position radiale de chaque sabot (6) est surveillée durant le mouvement de fonctionnement de chaque sabot (6).

2. Appareil de manipulation selon la revendication 1, dans lequel ledit système de surveillance comprend, pour chaque élément de préhension (5), un transducteur de position (9) configuré pour générer un signal de position (S1) indicatif de la position radiale du sabot respectif (6), ledit système de surveillance comprenant au moins un module de surveillance électronique (14) configuré pour recevoir ledit signal de position (S1).

3. Appareil de manipulation selon une ou plusieurs des revendications précédentes, dans lequel ledit système de surveillance est configuré pour exécuter une surveillance de force, au moyen de laquelle la force échangée entre chaque sabot (6) et la structure de pneu annulaire (200) est surveillée durant le mouvement de fonctionnement de chaque sabot (6).

4. Appareil de manipulation selon la revendication 3, dans lequel ledit système de surveillance comprend, pour chaque élément de préhension (5), un transducteur de force (12) configuré pour générer un signal de force (S2) indicatif de la force échangée entre chaque sabot (6) et la structure de pneu annulaire (200) durant ledit mouvement de fonctionnement, ledit système de surveillance comprenant au moins un module de surveillance électronique (14) configuré pour recevoir ledit signal de force (S2).

5. Appareil de manipulation selon une ou plusieurs des revendications précédentes, comprenant un nombre de sabots (6) différent d'un nombre de secteurs de vulcanisation d'un moule de vulcanisation (200) agencé en aval de l'appareil de manipulation, ou d'un multiple ou d'un sous-multiple dudit nombre de secteurs de vulcanisation d'un moule de vulcanisation (200) agencé en aval de l'appareil de manipulation, et/ou comprenant un nombre de sabots (6) différent d'un nombre de secteurs de confection de tambour (300) utilisés pour la confection, ou d'un multiple ou d'un sous-multiple dudit nombre de secteurs de confection de tambour (300) utilisés pour la confection.

6. Machine de galbage (400) comprenant un appareil de manipulation selon une ou plusieurs des revendications précédentes, dans lequel ladite bague de préhension (1) est adaptée pour recevoir au moins un manchon extérieur (201), et un mandrin (401) adapté pour recevoir un manchon de carcasse (202), dans lequel ledit appareil de manipulation est agencé dans une position fixe sur la machine de galbage (400) et ledit mandrin (401) est axialement mobile en rapprochement et éloignement de la bague de préhension (1).

7. Procédé pour manipuler une structure de pneu annulaire (200), ledit procédé comprenant :
- l'agencement d'une pluralité de sabots (6) distribués selon une direction circonférentielle autour d'un axe central (3), chaque sabot (6) de ladite pluralité de sabots (6) étant mobile entre une pluralité de positions radiales et ayant une surface de préhension (7) faisant face audit axe central (3), dans lequel les surfaces de préhension (7) de ladite pluralité de sabots (6) sont agencées dans une direction circonférentielle par rapport à l'axe central (3), chaque sabot (6) étant agencé dans une première position radiale adaptée pour recevoir une structure de pneu annulaire (200) destinée à être manipulée,
- l'agencement de ladite structure de pneu annulaire (200) enroulée sur un tambour (300) à l'intérieur de la pluralité de sabots (6) et coaxiale avec ledit axe central (3),
- le fonctionnement et la mise en mouvement de chaque sabot (6) indépendamment des autres pour générer un mouvement de fermeture de fonctionnement qui, en commençant à partir de la première position radiale, met lesdits sabots (6) dans une seconde position radiale dans laquelle lesdites surfaces de préhension (7) sont en contact avec la structure de pneu annulaire (200) et la maintiennent,
- l'exécution d'une surveillance de position, par l'intermédiaire de laquelle la position radiale de chaque sabot (6) est surveillée au moins durant le mouvement de fermeture de fonctionnement de chaque sabot (6),
- la contraction radiale du tambour (300) et son extraction axiale à partir de la structure de pneu annulaire (200) retenue par les sabots (6).

8. Procédé pour manipuler une structure de pneu annulaire (200) selon la revendication 7, comprenant la réalisation d'une action de commande selon ladite surveillance de position, ladite action de commande comprenant une ou plusieurs de :
- la commande au moins dudit mouvement de fermeture de fonctionnement en fonction de ladite surveillance de position,
- la signalisation ou l'activation d'une intervention de maintenance ou d'une intervention d'ajustement d'une station ou d'un dispositif (101) pour confectionner la structure de pneu annulaire (200),
- la signalisation ou l'activation d'une intervention d'ajustement d'une étape de confection de la structure de pneu annulaire (200).

9. Procédé pour manipuler une structure de pneu annulaire (200) selon une ou plusieurs des revendications 7 et 8, ledit procédé comprenant :
la réalisation d'une surveillance de force, au moyen de laquelle la force échangée entre chaque sabot (6) et la structure de pneu annulaire (200) est surveillée au moins durant le mouvement de fermeture de fonctionnement de chaque sabot (6).

10. Procédé pour manipuler une structure de pneu annulaire (200) selon la revendication 9, comprenant la réalisation d'une action de commande selon ladite surveillance de position et selon ladite surveillance de force, ladite action de commande comprenant une ou plusieurs de :
- la commande au moins dudit mouvement de fermeture de fonctionnement en fonction de ladite surveillance de position et de ladite surveillance de force,
- la signalisation ou l'activation d'une intervention de maintenance ou d'une intervention d'ajustement d'une station ou d'un dispositif (101) pour confectionner la structure de pneu annulaire (200),
- la signalisation ou l'activation d'une intervention d'ajustement d'une étape de confection de la structure de pneu annulaire (200).

11. Procédé pour manipuler une structure de pneu annulaire (200) selon une ou plusieurs des revendications 7 à 10, comprenant :
- la réalisation d'une course d'approche (X1) dudit mouvement de fermeture de fonctionnement qui met les sabots (6) de la première position radiale à une position de contact radiale dans laquelle les surfaces de préhension (7) entrent en contact avec la structure de pneu annulaire (200),
- la détection de l'atteinte de ladite position de contact radiale des sabots au moyen de ladite surveillance de position et de ladite surveillance de force,
- simultanément, la réalisation d'une étape initiale de la contraction radiale du tambour (300) et d'une course de suivi (X2) dudit mouvement de fermeture de fonctionnement qui met les sabots (6) de la position de contact radiale à la seconde position radiale,
- l'arrêt dudit mouvement de fermeture de fonctionnement lorsque lesdits sabots (6) sont dans la seconde position radiale et la continuation de la contraction radiale du tambour (300) jusqu'à l'accomplissement d'une dimension radiale appropriée pour l'extraction axiale du tambour (300) à partir de la structure de pneu annulaire (200).

12. Processus pour confectionner des pneus verts, incluant :
- la confection d'un manchon de carcasse (202) sur un tambour de confection (301),
- la confection d'un manchon extérieur (201) sur un tambour auxiliaire (302),
- la préhension dudit manchon extérieur (201) au moyen d'une pluralité de sabots (6) d'une bague de préhension (1) d'une machine de galbage (400), par l'application d'un procédé pour manipuler une structure de pneu annulaire selon une ou plusieurs des revendications 7 à 11, dans lequel ledit manchon extérieur (201) définit une première structure de pneu annulaire,
- le galbage du manchon de carcasse (202) à l'intérieur du manchon extérieur (201) en les couplant mutuellement,
- l'exécution d'une action de commande selon ladite surveillance de position, ladite action de commande étant connexe à des conditions de préhension du manchon extérieur (201) et/ou à des conditions de confection du manchon extérieur (201).

13. Processus pour confectionner des pneus verts selon la revendication 12, en appliquant, sur ledit manchon extérieur (201), un procédé pour manipuler une structure de pneu annulaire selon une ou plusieurs des revendications 9 à 11, comprenant l'exécution d'une action de commande selon ladite surveillance de position et ladite surveillance de force, ladite action de commande étant connexe à des conditions de préhension du manchon extérieur (201) et/ou des conditions de confection du manchon extérieur (201).

14. Processus pour confectionner des pneus verts selon la revendication 12 ou 13, comprenant :
- l'agencement dudit manchon de carcasse (202) sur un mandrin (401) de la machine de galbage (400), coaxial et dans une position radialement intérieure par rapport au manchon extérieur (201), dans lequel un ensemble (203) constitué du manchon de carcasse (202) agencé à l'intérieur du manchon extérieur (201) définit une deuxième structure de pneu annulaire,
- le galbage dudit manchon de carcasse (202) à l'intérieur du manchon extérieur (201) alors que les sabots (6) de la bague de préhension (1) sont verrouillés dans la seconde position radiale et servent de butée pour le galbage,
- l'application, sur ladite deuxième structure de pneu annulaire, d'un procédé pour manipuler une structure de pneu annulaire selon une ou plusieurs des revendications 9 à 11, la surveillance de la force échangée entre chaque sabot (6) et la deuxième structure de pneu annulaire durant le galbage du manchon de carcasse (202),
- l'exécution d'une action de commande selon ladite surveillance de position et ladite surveillance de force, ladite action de commande étant connexe à des conditions de galbage du manchon de carcasse (202) et/ou à des conditions de confection du manchon extérieur (201) ou du manchon de carcasse (202).

15. Processus pour confectionner des pneus verts selon la revendication 14, comprenant :
- le roulage de ladite deuxième structure de pneu annulaire à l'extérieur de la bague de préhension (1) pour obtenir un pneu vert,
- la préhension dudit pneu vert au moyen de ladite pluralité de sabots (6), par l'application d'un procédé pour manipuler une structure de pneu annulaire selon une ou plusieurs des revendications 7 à 11, dans lequel ledit pneu vert définit une troisième structure de pneu annulaire,
- l'exécution d'une action de commande selon ladite surveillance de position, ladite action de commande étant connexe à des conditions de préhension du pneu vert et/ou à des conditions de confection du pneu vert,
- l'application, sur ledit pneu vert, d'un procédé pour manipuler une structure de pneu annulaire selon une ou plusieurs des revendications 9 à 11, comprenant l'exécution d'une action de commande selon ladite surveillance de position et ladite surveillance de force, ladite action de commande étant connexe à des conditions de préhension du pneu vert et/ou à des conditions de confection du pneu vert.
